# EUROPEAN PATENT SPECIFICATION

(11) **EP 1 336 772 B1**
(45) Date of publication and mention of the grant of the patent: **12.12.2007**
(21) Application number: 02445024.9
(22) Date of filing: 15.02.2002
(51) Int. Cl.: F16H 57/02

(54) **A method for a gear mechanism assembly**
Getriebezusammenbauverfahren
Procédé d'assemblage d'engrenage

(43) Date of publication of application: 20.08.2003
(73) Proprietor: Ford Global Technologies, LLC, Dearborn, MI 48126 (US)
(72) Inventor: Jörgensson, Mathias, 444 46 Stenungsund (SE); Larsson, Mikael, 449 33 Nödinge (SE); Svensson, Hakan, 433 15 Jonsered (SE)
(74) Representative: Hellbom, Lars Olof

(56) References cited:
- US-A- 1 492 819
- US-A- 2 549 477
- US-A- 3 826 151
- US-A- 4 248 487
- US-A- 5 293 686
- US-A- 5 743 145
- US-A- 5 806 371

## Description

### TECHNICAL FIELD

The present invention relates to a method for the assembly of a gear mechanism assembly comprising a housing, a first axle, a second axle, the first and second axles being rotatably connected to the housing and oriented at an angle in relation to each other, a first gear, beveled, fixedly connected to the first axle and located within the housing, and a second gear, beveled, fixedly connected to the second axle, located within the housing and engaged with the first gear.

### BACKGROUND

A gear mechanism of the type initially described can be in the form of a hypoid drive. Such a drive could be installed in a vehicle for transferring torque from a transmission arranged crosswise to a longitudinal drive shaft.

Fig. 1 shows a prior art example of a hypoid drive. A similar gear is disclosed in GB2223068A. A casing for such a mechanism normally comprises two parts A, B, joined by a set of bolts C spaced apart around the casing. The orientation of the parting line of the two casing parts is such that assembly of the hypoid gear, involving positioning of the bevel pinion and the crown wheel, can be accomplished. Therefore the parting line is oriented at an angle to the axles of the gear, so that the gear parts can be mounted in one of the casing parts, while the other casing part is removed.

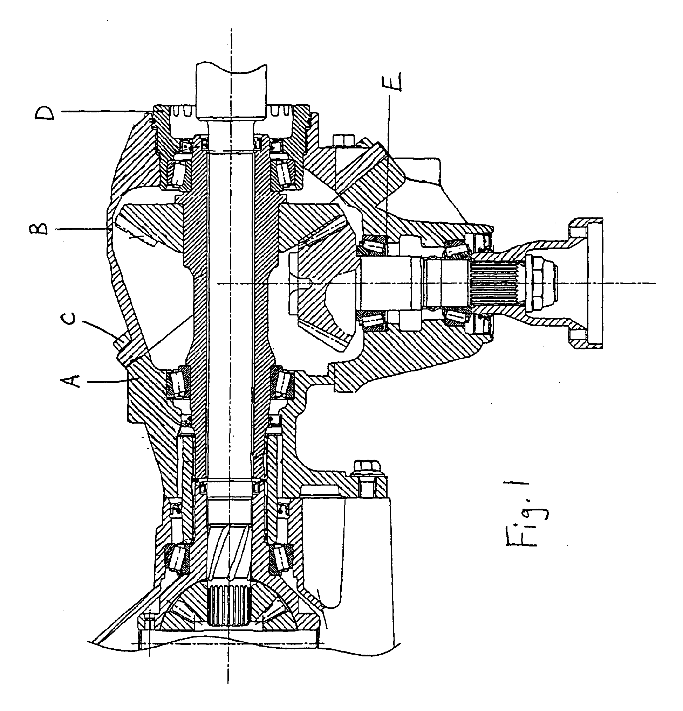

A hypoid drive assembly as the one shown in fig. 1 presents a number of disadvantages. It involves a relatively large number of parts, reflecting on high manufacturing costs. The two casing parts need two separate complicated tools for their respective production. Sand casting of aluminum is often involved in manufacturing of casings for this type of gears, and tools therefore are expensive.

Also, a large number of bolts are needed, which causes a relatively large cost for parts involved, and, in addition, makes the assembly of the casing complicated since it comprises many steps.

Additionally, the entire assembly procedure of the known hypoid drive is complicated. It involves accurately machining the surfaces of the joint of the casing parts. For accurately positioning of the two casing parts in relation to each other, high tolerance guide pins are needed, since the bolts of joint cannot provide sufficient lateral stability. Once the casing joint is machined, the seats for the bearing supporting the crown wheel axle has to be machined. This has to be done with the casing assembled. After that the casing is once again disassembled, so that parts such as the bevel pinion can be positioned. Subsequently, once again the casing is assembled and an adjustment nut D, see fig. 1, is positioned coaxially to the crown wheel axle, to adjust the pre-stresses of the bearing for said axle.

Another disadvantage with the type of hypoid drive shown in fig. 1 is as follows. The bevel pinion has to be positioned with great accuracy to avoid noise during operation of the gears. The longitudinal position of the bevel gear has to be within a tolerance of 0.01 mm, and is adjusted by a suitable shim E (see fig. 1) at a seat of the bevel pinion. A specially designed measuring tool placed in the position of the crown wheel axle, before the latter is positioned in the casing, is used to check the longitudinal position of the bevel pinion. To allow access of this tool, one of the casing parts B has to be removed. The measuring tool is supported against a bearing surface, for the crown wheel axle, in the remaining casing part A. Since the size of the tool's support surface usually is small compared to the distance between the support surface and the area of measurement, accurate measuring is difficult, since movement of the measuring tool is not sufficiently prevented.

Yet another problem with the known design shown in fig. 1 is that, since one of the taper roller bearings supporting the crown wheel axle rests against one casing part and the other taper roller bearing supporting the crown wheel axle rests against the other casing part, whereby a force acts directed so as to push the bearings apart, the parting line will experience a force component in the lateral direction of the bolts and guide pins of the joint. During long term operation this lateral force can cause relative movement of the casing parts, and this gives rise to a quality problem of the gear assembly.

US 5806371 discloses a method for assembling with the features of the preamble of claim 1.

### SUMMARY OF THE INVENTION

An object of the present invention is to present a gear mechanism of the initially described type, the manufacturing procedure of which is simpler than in known art.

Another object of the present invention is to present a gear mechanism of the initially described type, the manufacturing cost of which is lower than in known art.

Yet another object of the present invention is to present a gear mechanism of the initially described type, which presents a better endurance to wear in operation, than similar gear mechanisms in known art.

A gear mechanism assembly comprises a housing, a first axle, a second axle, the first and second axles being rotatably connected to the housing and oriented at an angle in relation to each other, a first gear, beveled, fixedly connected to the first axle and located within the housing, and a second gear, beveled, fixedly connected to the second axle, located within the housing and engaged with the first gear, whereby the housing is provided with an opening, at which the housing presents a first threaded surface in the region of the opening, the threads of the first threaded surface being essentially coaxial with the first axle, in that the gear mechanism comprises a support member, provided with a second threaded surface and adapted to be connected to the housing by the threads of the second threaded surface engaging the threads of the first threaded surface, and in that the housing is formed in one piece.

The housing or casing being formed in one piece, or manufactured in only one part has a number of advantages. Where sand casting of aluminum is involved in the manufacturing process, considerable cost savings will be made since only one sand casting tool is needed. The support member can be produced in aluminum by die casting, which is much less expensive than sand casting. Also, this eliminates the need for a large number of bolts to assemble two housing parts.

Avoiding a housing in two parts having a parting line in an angle to the axles of the gear results in a more stable configuration. The problem of wear causing relative movement between the housing parts is avoided.

Preferably, a first and a second bearing, support the first axle, the first bearing connecting the first axle to the housing, the second bearing connecting the first axle to the support member. This allows adjusting in an easy manner the pressure on the bearings supporting the first axle by rotating the support member in relation to the housing and thereby moving it in its axial direction.

The size of the opening in the housing is chosen so that the first and the second axle, with the first and the second gear, respectively, can be passed through the opening during assembly to the gear mechanism. This eliminates the need for the housing having to split into two parts during the assembly in order to position gear mechanism parts.

The housing comprises, in the region of the opening, a support surface adapted to support a measuring tool for the positioning of the second gear. This allows during assembly for a specially designed measuring tool placed with great stability in the position of the first axle to check the longitudinal position of the second gear. The stability is obtained by the measuring tool being supported on both sides of the area of measurement, i.e. the tool will be supported against the support surface of the housing and a bearing surface for the first bearing for the first axle. This will ensure accurate measuring since movement of the measuring tool is effectively prevented.

The objects stated above are reached by a method for assembling the gear mechanism according to claim 1 comprising the steps of inserting the second gear into the housing through the opening, mounting the second gear in the housing, inserting the first axle into the housing through the opening, connecting the support member to the housing at the opening, and mounting the first axle in the housing so that the first axle is at least partly supported by the support member. Thereby, both axles and gears can be inserted during assembly through the same opening, which also serves as a part of a mounting arrangement for the support member, which in turn is used for adjustment of the bearing pressure of the first axle.

### DESCRIPTION OF THE FIGURES

The invention will now be described in greater detail with the aid of the enclosed drawings in which
- fig. 1 shows a cross-sectional view of a gear mechanism assembly according to prior art,
- fig. 2 shows a cross-sectional view of a gear mechanism assembly according to a preferred embodiment of the invention, and
- fig. 3 shows a cross-sectional view of a part of the gear mechanism in fig. 2 partly assembled, with a measuring device.

### DETAILED DESCRIPTION

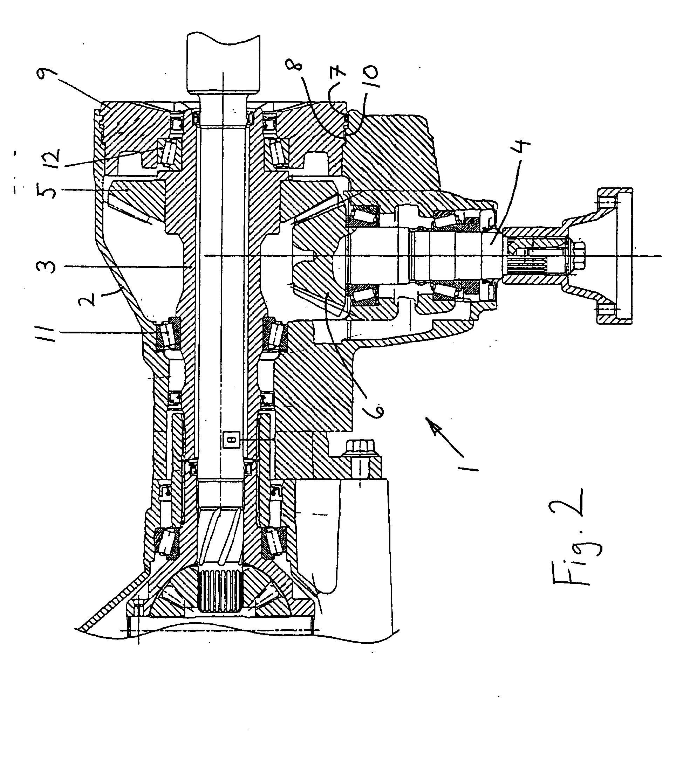

Fig. 2 shows a hypoid drive assembly 1 comprising a housing 2, a first 3, and a second axle 4. The first and second axles 3, 4 are rotatably connected to the housing 2 and oriented at a 90°-angle in relation to each other. The center-lines of the axles are located at a distance from each other, i.e. the center line of the second axle 4 points in a direction, which does not intersect with the center line of the first axle 3. In fig. 2 the center line of the first axle 3 should be regarded as being located closer to the observer that the center line of the second axle 4.

A first gear 5, in the form of a crown wheel 5, positioned on the first axle and located within the housing 2 is adapted to engage a second gear 6, in the form of a bevel pinion 6, positioned on the second axle and located within the housing.

The housing 2 is provided with an opening 7, which has a circular shape, at which the housing 2 presents a first threaded surface 8 in the region of the opening 7. The threads of the first threaded surface 8, forming internal threads in the opening 7, are essentially coaxial with the first axle 3. The housing 2 is adapted to receive in the opening 7 a support member 9, having a circular shape and being provided with a second threaded surface 10 forming external threads adapted to engage the first threaded surface 8.

The support member 9 is provided with a center opening through which the first axle 3 can protrude. Alternatively, the support member 9 is not provided with such an opening, whereby the first axle 3 does not extend beyond the support member.

The first axle 3 is supported by a first 11 and a second 12 bearing, each of the taper rolling bearing type. Alternatively, another type of bearing could be used. Suitably any bearing type used is adapted to carry loads both in the longitudinal and the transverse direction. The first bearing 11 connects the first axle 3 to the housing 2 and the second bearing 12 connects the first axle 3 to the support member 9.

During assembly of the hypoid drive 1, the bevel pinion 6 with the second axle 4 is positioned in the operative position shown in fig. 2 before support member 9 and the first axle 3 with the crown wheel 5 are positioned. The opening 7 of the housing 2 is large enough to allow entering the bevel pinion 4 through the opening 7, in order to position the bevel pinion 6.

When the bevel pinion 6 with the second axle 4 is in place, the first axle 3 is entered through the opening 7 and positioned. Thereupon the support member 9 is mounted to the housing 2 by means of the threaded surfaces 8, 10, whereby the support member comes into contact with the second bearing 12 and thereby forms a support for the first axle 3. When the support member 9 is rotated around its center axis and guided by the mutual engagement of the first 8 and second 10 threaded surface, it moves in the longitudinal direction of the second axle 3. Thereby, the support member is used to adjust the pre-stressing force on the first and second bearings 11, 12. In the case of taper rolling bearings, the pre-stresses thereof should normally be in the vicinity of 10 kN.

Thus, the invention provides for a hypoid drive assembly, at the two functions of opening the housing for assembly and adjusting the pre-stressing force on the bearings of one of the axles are provided for by the same part.

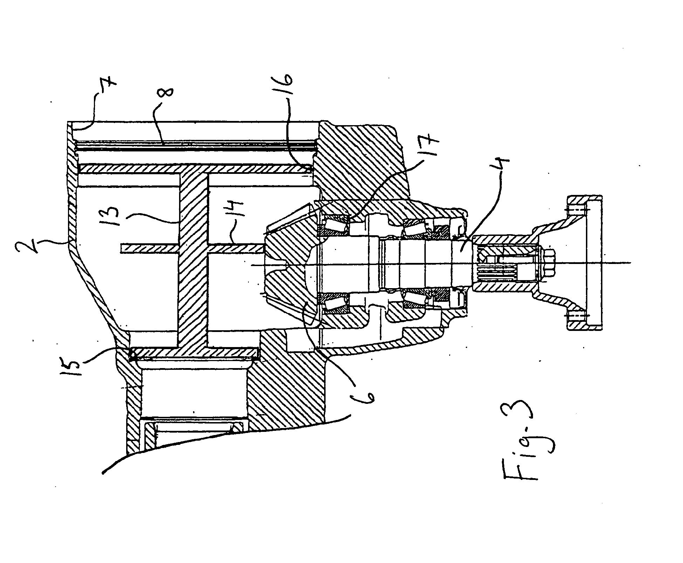

In fig. 3 a measuring device 13 can be seen positioned in the housing 2 of the hypoid drive assembly. Thereby the first axle with the crown wheel and the support member are removed. It should be noted that the opening 7 is large enough to allow the crown wheel to pass for easy removal.

The measuring device 13 is easily entered through the opening and is used to measure the longitudinal position of the bevel pinion 6. In a measuring area above the bevel pinion 6, the measuring device 13 comprises a distance piece 14, which, when the measuring device 13 is in position, indicated the correct longitudinal position of the bevel pinion 6 by contact with the latter. Alternatively, other means for accurately checking the bevel pinion position can be used, such as a laser.

The measuring device 13 is supported by contact against a surface 15 on the housing or on a part resting against the housing. It is also supported against a support surface 16 on the housing in the region of the opening 7. Thereby the measuring device 13 is firmly secured to assure an accurate measurement.

The longitudinal position of the bevel pinion 6 is determined by the thickness of at least one shim 17, located at one of the bearing for the bevel pinion 6. If it is found that the position of the bevel pinion 6 has to be adjusted, the measuring device and the bevel pinion with the second axle 4 are easily removed through the opening 7, and the shim 17 is replaced, upon which the pinion 6 is positioned again.

A method for assembling the gear mechanism according to the invention will generally comprise the steps of inserting the second gear 6 into the housing 2 through the opening 7, mounting the second gear 6 in the housing 2, inserting the first axle 3 into the housing 2 through the opening 7, connecting the support member 9 to the housing at the opening 7, and mounting the first axle 3 in the housing 2 so that the first axle is at least partly supported to the support member 9. As has already been pointed out an advantage of the invention is that both axles and gears 5, 6 can be inserted during assembly through the same opening, which also serves as a part of a mounting arrangement for the support member 9, which in turn is used for adjustment of the bearing pressure of the first axle.

As has already been discussed, the method for assembling the gear mechanism also comprises the steps of inserting the measuring tool 13 into the housing 2 through the opening 7, positioning the measuring tool 13 so that it is at least partly supported by the support surface 16, and measuring the position of the second gear 6 using the measuring tool 13. The support surface 16 provides for easy positioning of the measuring tool 13. Both the measuring tool and the second gear 6 can be easily positioned and removed through the same opening 7 during the procedure of correctly positioning the second gear 6. Compared to known art, this simplifies the assembly procedure of the gear mechanism and decreases the assembly time.

The invention is not limited to hypoid gears. It can also be used for any type of drive involving beveled gears.

## Claims

1. A method for assembling a gear mechanism assembly, comprising a housing (2), a first axle (3), a second axle (4), the first and second axles being adapted to be rotatably connected to the housing (2) and oriented at an angle in relation to each other, a first gear (5), beveled, fixedly connected to the first axle (3), and a second gear (6), beveled, fixedly connected to the second axle (4) and adapted to be engaged with the first gear (5), the housing (2) being provided with an opening (7), comprising the steps of
- inserting the second gear (6) into the housing (2) through the opening (7),
- mounting the second gear (6) in the housing (2)
- inserting the first axle (3) into the housing (2) through the opening (7),
- connecting a support member (9) to the housing at the opening (7), and
- mounting the first axle (3) in the housing (2) so that the first axle is at least partly supported by the support member (9) **characaterized in that** the method further comprises the steps of
- inserting a measuring tool (13) into the housing (2) through the opening (7),
- positioning the measuring tool (13) so that it is at least partly supported by a support surface (16) in the region of the opening (7), and
- measuring the position of the second gear (6) using the measuring tool (13).

## Patentansprüche

1. Verfahren zur Montage einer Getriebemechanismusanordnung, mit einem Gehäuse (2), einer ersten Achse (3), einer zweiten Achse (4), I wobei die erste und die zweite Achse geeignet sind, mit dem Gehäuse (2) drehbar verbunden und in einem Winkel in Bezug aufeinander ausgerichtet zu werden, einem ersten Zahnrad (5), abgeschrägt, fest mit der ersten Achse (3) verbunden, und einem zweiten Zahnrad (6), abgeschrägt, fest mit der zweiten Achse (4) verbunden und geeignet, mit dem ersten Zahnrad (5) in Eingriff gebracht zu werden, wobei das Gehäuse (2) mit einer Öffnung (7) versehen ist, die folgenden Schritte umfassend:
- Einführen des zweiten Zahnrads (6) in das Gehäuse (2) durch die Öffnung (7),
- Anbringen des zweiten Zahnrads (6) in dem Gehäuse (2),
- Einführen der ersten Achse (3) in das Gehäuse (2) durch die Öffnung (7),
- Verbinden eines Stützelements (9) mit dem Gehäuse an der Öffnung (7), und
- Anbringen der ersten Achse (3) in dem Gehäuse (2), so dass die erste Achse zumindest teilweise durch das Stützelement (9) gestützt wird, **dadurch gekennzeichnet, dass** das Verfahren ferner die folgenden Schritte umfasst:
- Einführen eines Messwerkzeugs (13) in das Gehäuse (2) durch die Öffnung (7),
- Positionieren des Messwerkzeugs (13), so dass es zumindest teilweise durch eine Stützoberfläche (16) in dem Bereich der Öffnung (7) gestützt wird, und
- Messen der Position des zweiten Zahnrads (6) unter Verwendung des Messwerkzeugs (13).

## Revendications

1. Un procédé destiné au montage d'un assemblage d'engrenage, comportant un boîtier (2), un premier axe (3), un deuxième axe (4), les premier et deuxième axes étant adaptés pour être rotativement raccordés au boîtier (2) et orientés à un certain angle l'un par rapport à l'autre, un premier engrenage (5), chanfreiné, fixement raccordé au premier axe (3), et un deuxième engrenage (6), chanfreiné, fixement raccordé au deuxième axe (4) et adapté pour être engagé avec le premier engrenage (5), le boîtier (2) étant pourvu d'une ouverture (7), comportant les étapes suivantes
- insertion du deuxième engrenage (6) dans le boîtier (2) par l'ouverture (7),
- montage du deuxième engrenage (6) dans le boîtier (2),
- insertion du premier axe (3) dans le boîtier (2) par l'ouverture (7),
- raccordement d'un membre de support (9) avec le boîtier à l'ouverture (7), et
- montage du premier axe (3) dans le boîtier (2) de sorte que le premier axe est au moins partiellement supporté par le membre de support (9) **caractérisé en ce que** le procédé comporte en outre les étapes suivantes
- insertion d'un outil de mesure (13) dans le boîtier (2) par l'ouverture (7),
- positionnement de l'outil de mesure (13) de sorte qu'il est au moins partiellement supporté par une surface de support (16) dans la région de l'ouverture (7), et
- mesurage de la position du deuxième engrenage (6) utilisant l'outil de mesure (13).
